# EUROPÄISCHE PATENTSCHRIFT

(11) **EP 0 360 032 B1**
(45) Veröffentlichungstag und Bekanntmachung des Hinweises auf die Patenterteilung: **09.02.1994**
(21) Anmeldenummer: 89115777.8
(22) Anmeldetag: 26.08.1989
(51) Int. Cl.: B60R 11/02, H04B 1/08

(54) **Halterung für Datenkommunikationsgeräte**
Holder for data communication devices
Support pour un appareil de communication de données

(30) Priorität: 20.09.1988 DE 3831829
(43) Veröffentlichungstag der Anmeldung: 28.03.1990
(73) Patentinhaber: Mannesmann Kienzle GmbH (HR B1220), 78052 Villingen-Schwenningen (DE)
(72) Erfinder: Koch, Siegfried, Dipl.-Ing. (FH), D-7730 Villingen-Schwenningen (DE)

(56) Entgegenhaltungen:
- EP-A- 0 014 749
- DE-A- 3 009 483
- US-A- 4 088 848
- US-A- 4 411 485
- US-A- 4 582 962

## Beschreibung

Die Erfindung betrifft eine Halterung für Datenkommunikationsgeräte, welche als an die Halterung angepaßte Handgeräte ausgebildet und für den Datentransport zwischen einer Datenverarbeitungsanlage und einer oder mehreren Datenquellen vorgesehen sind, mit den Datenkommunikationsgeräten zugeordneten Leitungstrennstellen.

Derartige Datenkommunikationsgeräte, im folgenden als Handgeräte bezeichnet, finden bereits vielfache Anwendung, und zwar in Form von leicht handhabbaren, insbesondere auch in der Hand bedienbaren Geräten zur dezentralen, digitalen Datenerfassung und zum Datentransport zwischen meist mehreren Datenquellen und einer zentralen Datenverarbeitungsanlage, aber auch in einem beschränkten, zweckorientierten Umfang zur Datenverarbeitung vor Ort und zur Benutzerführung.

Im einfachsten Falle werden für die betreffenden Datentransportaufgaben Datenkassetten eingesetzt Bei einer höheren Ausbaustufe können eine numerische und eine Befehlstastatur, ein Display, Mittel zur Verwendung eines Barcode-Lesestiftes sowie eine geeignete Druckeinrichtung vorgesehen sein, d. h. solche Geräte sind als mit geeigneten Schnittstellen ausgerüstete Kleinrechner mit einer nachladbaren Stromversorgung konzipiert.

Ein bevorzugtes Anwendungsgebiet für derartige Handgeräte ist das Nutzfahrzeug bzw der Fuhrpark, wo Fahrzeugbetriebs- und -einsatzdaten sowohl für unmittelbare Entscheidungen, beispielsweise Wartungsmaßnahmen, als auch für die spätere Tourenplanung zu erfassen sind und andererseits die Fahrer durch auf einer stationären Datenverarbeitungsanlage erstellte Tourenpläne optimal geführt, zumindest jedoch informiert werden.

Zweifellos kann durch die Anwendung eines derartigen Systems die Effizienz des Fahrzeugeinsatzes, beispielsweise im gewerblichen Güterverkehr, erheblich gesteigert werden. Eine breitere Anwendung scheiterte bisher jedoch an einer mangelnden Akzeptanz nicht der EDV an sich, sondern der zu handhabenden Geräte, von denen wenigstens ein Teil infolge der zugeordneten Funktionen sowohl relativ schwer, als auch großvolumig ist.

Entscheidend für die Akzeptanz eines derartigen Handgerätes ist dessen griffsympathische Gestaltung mit entsprechender Gewichtsverteilung und Kantenrundung, aber auch übersichtlicher Bedienbarkeit und Lesbarkelt anzuzeigender Informationen.

Für eine Anwendung in einem Kraftfahrzeug sind jedoch noch weitere Kriterien von Bedeutung, nämlich: ein Handgerät sollte im haptischen Bereich des Fahrers im Fahrerhaus gehaltert sein, es muß rüttelsicher anbringbar sein und die Befestigung bzw. Halterung des Handgerätes muß dem rauhen Arbeitsmilieu im Kraftfahrzeug angepaßt sein. D. h. die Befestigung des Handgerätes und die Kontaktierung bzw Kupplung des Handgerätes mit fahrzeugseitigen Energie- und Datenleitungen, über die das Handgerät mit Meßwert- und statischen Gebern sowie anderen Fahrzeuginstrumenten oder einem Fahrzeugdatenbus verbindbar ist, muß, ohne übertriebene Sorgfalt walten lassen zu müssen und ohne hinzusehen und Beschädigungen befürchten zu müssen, vorgenommen werden können.

Verständlicherweise sind Kabel- und Steckerverbindungen in diesem Zusammenhang untauglich Ferner muß vermieden werden, daß die Handgeräte, die einen festen Sitz auf einem geeigneten Träger haben müssen, in Führungen, beispielsweise in eine Schwalbenschwanzführung, einzufädeln sind, wobei, um ein Verkanten zu vermeiden, bekanntlich eine exakte Ausrichtung erforderlich ist. Ungeeignet sind ferner taschenförmige oder muldenförmige Aufnahmen für die Handgeräte, da in diesen Fällen die Zugriffsmöglichkeiten eingeschränkt sind.

Der Erfindung lag demnach die Aufgabe zugrunde, eine insbesondere für einen rauhen Betrieb geeignete Halterung für transportable. Datenkommunikationsgeräte zu schaffen, die eine eindeutige und einfache Handhabung der Handgeräte gestattet und eine hohe Funktionssicherheit bezüglich der Leitungskopplung und der Befestigung an sich bietet.

Die Lösung dieser Aufgabe sieht vor, daß an einem Träger eine im wesentlichen ebene Flanschfläche ausgebildet ist, daß der Flanschfläche eine aus dem Träger herausragende Konsole zugeordnet ist, daß an dem Träger im Bereich der Flanschfläche Renkverbindungsmittel für die zu halternden Handgeräte vorgesehen sind und daß der Konsole ein sich parallel zur Flanschfläche erstreckendes und mit den zu halternden Handgeräten in Wirkverbindung tretendes Führungsteil zugeordnet ist.

Vorteilhafte Weiterbildungen der Erfindung beschreiben die Unteransprüche.

Die Erfindung gewährleistet mit einfachen Mitteln eine feste, rüttelsichere Verbindung und durch Vorsehen eines Druckpunktes ein gefühlsmäßig sicheres Positionieren und somit einen sicheren Leitungsschluß zwischen ortsfesten und geräteseitigen Energie- und Datenleitungen. Dabei ist die erforderliche Sorgfalt für das Positionieren dadurch, daß die Handgeräte zunächst an einer Flanschfläche "angeschlagen" werden können, wobei eine selbsttätige Zentrierung an dem vorzugsweise kalottenförmigen Kopfzapfen erfolgt, und dann lediglich gegen die einen stabilen Anschlag bildende Konsole, die die Renkelemente vor Beschädigungen schützt, zu ziehen sind, weitgehend minimiert. Diese Bewegung ist in der Regel abwärts oder gegen den Benutzer gerichtet, d. h. der Bewegungsablauf beim ortsfesten Anbringen eines Handgerätes ist auch ergonomisch optimiert, wobei das Handgerät an zwei Stirnflächen sicher gegriffen werden kann.

Von Vorteil im Hinblick auf eine "lässige" Handhabung der Handgeräte ist ferner, daß sie durch geeignete Gestaltung des Führungsteils und/oder des dem Führungsteil zugeordneten Schlitzes bzw einer frontseitigen Einbuchtung im Handgerät auch unter einem gewissen Winkel zu ihrer Endposition auf der Flanschfläche aufgesetzt werden und durch Verdrehen in die richtige Renkposition verschwenkt werden können. Selbstverständlich können auch mehrere Renkverbindungsstellen vorgesehen werden, jedoch ist dann der oben genannte Vorteil nicht mehr gegeben.

Ein weiterer Vorteil der Erfindung ist darin zu sehen, daß das sozusagen als Niederhalter wirkende Führungsteil definierte Koppelabstände für den Fall schafft, daß die Leitungstrennstellen im Bereich der aus der Konsole herausragenden Partie des Führungsteils angeordnet sind. Dabei kann das Führungsteil in der gefederten Ausführungsform einerseits derart ausgebildet sein, daß es im unbetätigten Zustand die Leitungstrennstellen der Energie- und Datenleitungen verschmutzungssicher und gegen Feuchtigkeit abdeckt, andererseits als Betätigungselement für das Einschalten beispielsweise der Energieversorgung des zu halternden Handgerätes dient. Der betreffende Schaltvorgang kann zusätzlich dazu verwendet werden, den richtigen Sitz des Handgerätes z. B. mittels einer Leuchtdiode anzuzeigen. In der bevorzugten Ausführungsvarianten hat das Führungsteil die drei vorstehend beschriebenen Funktionen. Denkbar ist eine Einfachausführung mit lediglich Befestigungsfunktion mit einer an der Konsole fest angeformten Rippe, einem Kamm oder dergl.

Die gefundene Lösung gestattet ferner das Haltern unterschiedlich breiter und unterschiedlich hoher Handgeräte, sozusagen das Haltern einer ganzen Gerätefamilie und läßt sich sowohl derart anwenden, daß die ortsfesten Halteelemente unmittelbar an einer die Flanschfläche bildenden Wand angeordnet bzw. ausgebildet, als auch einem Träger zugeordnet sind. Dieser kann an einer Wand aufgesetzt oder unter Verwendung geeigneter Bügel derart versenkt angebracht werden, daß die Flanschfläche beispielsweise mit der Wand bündig abschließt. Außerdem ist erwähnenswert, daß die erfindungsgemäße Halterung eine griffsympathische Gestaltung der Handgeräte, insbesondere was deren Rückseite anbelangt, ermöglicht.

Im folgenden sei ein Ausführungsbeispiel der Erfindung anhand der beigefügten Zeichnungen näher erläutert. Es zeigen
FIGUR 1 eine Übersichtsdarstellung mit einer Frontansicht eines Trägers und Frontansichten verschiedener, dem Träger zuordenbarer Handgeräte,
FIGUR 2 eine Perspektivdarstellung des Trägers gemäß FIGUR 1 mit einem an dem Träger anzubringenden Handgerät,
FIGUR 3 eine Draufsicht des in der Rückwand des Handgerätes gemäß FIGUR 2 eingelassenen Einsatzteiles,
FIGUR 4 eine Seitenansicht mit Teilschnitten des Trägers gemäß FIGUR 1 sowie eines Handgerätes in einem Zwischenstadium während des Anflanschens am bzw. der Entnahme vom Träger,
FIGUR 5 eine Seitenansicht mit Teilschnitten des Trägers gemäß FIGUR 1 sowie eines Handgerätes im gehalterten Zustand,
FIGUR 6 eine Rückansicht der Frontwand des Trägers,
FIGUR 7 einen Teilschnitt des Trägers gemäß der Schnittlinie A in FIGUR 1 mit einer Varianten der Ausbildung des im Träger gelagerten Führungsteils,
FIGUR 8 ein Schnittbild mit einem ortsfesten Träger zugeordneten Halterungselementen,
FIGUR 9 eine Draufsicht auf ein Führungsteil, wie es in den FIGUREN 2, 4 und 6 in anderen Ansichten dargestellt ist.

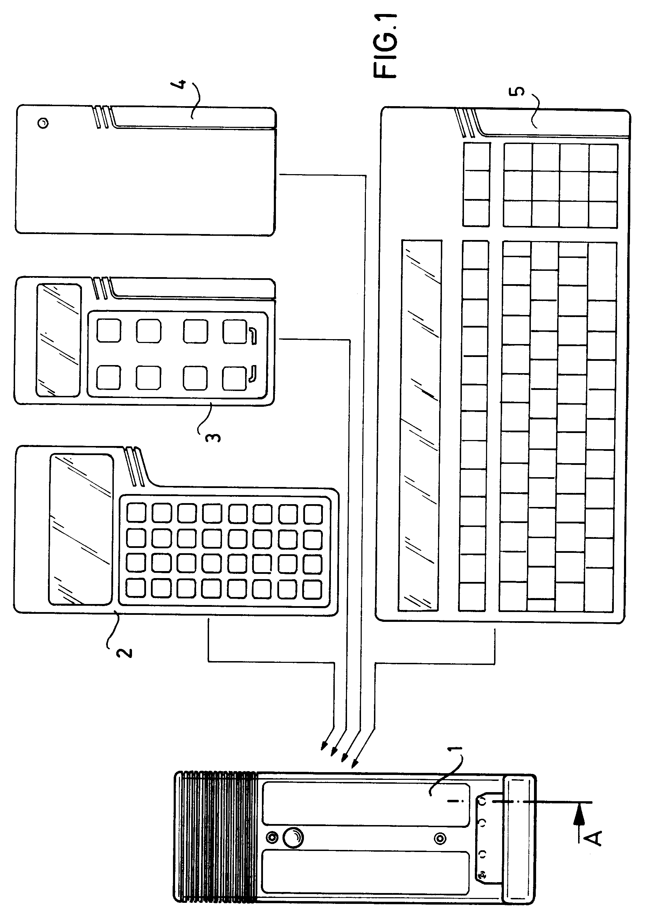

Die Übersichtsdarstellung FIGUR 1 zeigt eine Halterung, welche einen als autonomes Gerät mit einem im wesentlichen quaderförmigen Gehäuse 1 ausgebildeten Träger vorsieht. Der Halterung sind verschiedene Datenkommunikations-Handgeräte zugeordnet, die wahlweise mit der Halterung verbindbar sind. Mit 2 ist ein Handgerät bezeichnet, mit welchem beispielsweise im Handgerät abgelegte Daten abgefragt und angezeigt, aber auch von Hand eingegebene oder vom Fahrzeug übernommene angezeigt und/oder gespeichert werden können. Das Handgerät 3 dient, wie seine Tastatur erkennen läßt, im Fahrbetrieb einem dem Fahrer als Arbeitszeitinformationsgerät. Mit 4 ist eine Kassette bezeichnet, die als Speicher ausschließlich dem Datentransport dient, und mit 5 ist ein Handgerät dargestellt, welches zu einer alphanumerischen Tastatur erweiterte Eingabefunktionen bietet.

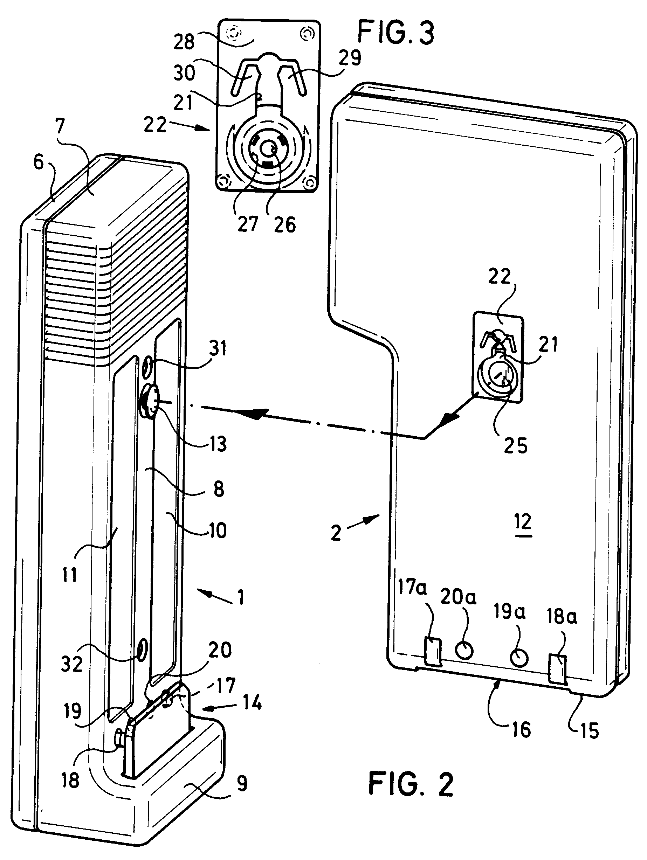

Gemäß FIGUR 2 ist das Gehäuse 1 des Trägers aus zwei Gehäuseschalen 6 und 7 zusammengefügt, wobei an der Gehäuseschale 7, deren eine Wand die Frontseite des Gehäuses 1 bildet, eine Flanschfläche 8 und eine Konsole 9 ausgebildet sind. Mit 10 und 11 sind Vertiefungen bezeichnet, die eine verbesserte Anlage der bis auf Öffnungen für die gewählten Renkverbindungsmittel völlig eben gestalteten Rückwände 12 der Handgeräte an der Flanschfläche 8 bewirken. Ferner ist aus FIGUR 2 ersichtlich, daß der Flanschfläche 8 ein in der Frontwand der Gehäuseschale 7 befestigter Kopfzapfen 13 mit einem das Zentrieren der Handgeräte erleichternden, kalottenförmigen Kopf zugeordnet ist. Der Halterung der Handgeräte dient ferner ein plattenförmig aus der Konsole 9 herausragendes und sich im wesentlichen parallel zur Flanschfläche 8 erstreckendes Führungsteil 14. Das Führungsteil 14 ist in geeigneter, im folgenden noch zu beschreibender Weise in der Gehäuseschale 7 gefedert gelagert und greift, wenn ein Handgerät 2 am Träger gehaltert ist, in eine an einer Stirnwand 15 des Handgerätes 2 ausgeformte taschen- oder schlitzförmige Aussparung 16 ein. Die Stirnwand 15 kann auch gestuft oder mit einer Einbuchtung versehen ausgebildet sein. Dabei bietet die taschenförmige Aussparung oder eine frontseitige Einbuchtung den Vorzug, daß ein aufgenommenes Handgerät auch gegen Verdrehen um den Kopfzapfen 13 gesichert ist und somit die Halterung auch derart anbringbar ist, daß die Handgeräte auch hochkant befestigt werden können.

Das Führungsteil 14 schirmt, wie aus der FIGUR 2 ersichtlich ist, wenn kein Handgerät gehaltert ist, aus der Flanschfläche 8 hervorstehende, federnde Kontakte 17 und 18 sowie die mit Fenstern 19 und 20 vorzugsweise flanschflächenbündig abgeschlossenen Trennstellen zweier Lichtkanäle ab. Den Kontakten 17 und 18, über die die Energieversorgung der angeschlossenen Handgeräte erfolgt, sind handgeräteseitig Flachkontakte 17a und 18a zugeordnet. Die Lichtkanäle, die der Datenübertragung dienen, sind handgeräteseitig mit Fenstern 19a und 20a abgeschlossen. Die Datenübertragung mittels beispielsweise Infrarotlicht ist in diesem Zusammenhang deshalb gewählt, weil sie in relativ weiten Grenzen abstands- und erschütterungsunabhängig ist.

Dem Kopfzapfen 13 ist als Gegenstück der Renkverbindung handgeräteseitig eine schlüssellochartige, wenigstens teilweise hinterschnittene Öffnung 21 zugeordnet, die in einem teilweise topfförmig geformten Einsatzteil 22 ausgebildet ist. Dem Einsatzteil, dessen vergrößerte Draufsicht in FIGUR 3 dargestellt ist, ist in der Rückwand des Handgerätes 2 eine Vertiefung 23 zugeordnet, in die es einsetzbar und mit einer Schraube 24 befestigbar ist.

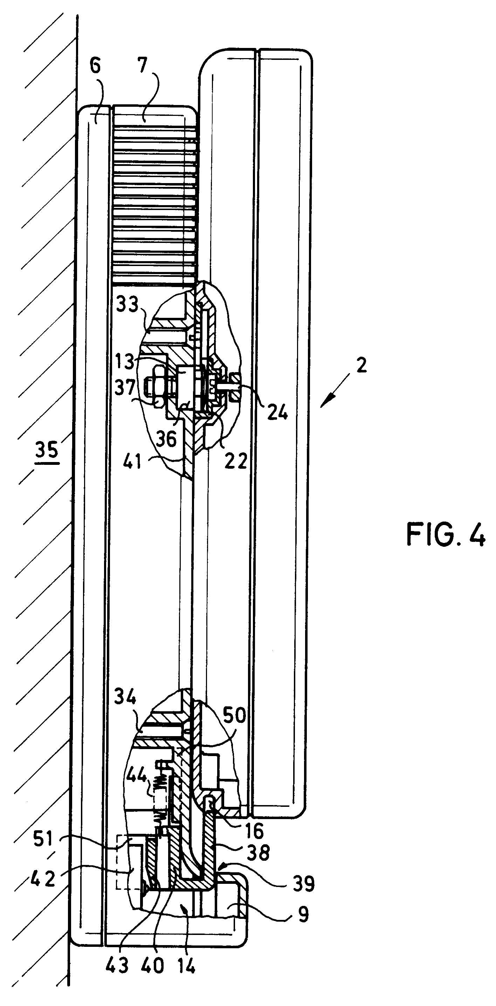

Wie FIGUR 4 zeigt, dient die Schraube 24, welcher eine Plombe 25 zugeordnet ist, gleichzeitig der Verschraubung des aus zwei Gehäuseschalen gebildeten Gehäuses des Handgerätes 2. Aus der FIGUR 3 geht hervor, daß für das Anbringen der Schraube 24 und der Plombe 25 im Einsatzteil 22 eine Durchgangsbohrung 26 und eine zylindrische Senkung 27 ausgebildet sind. Ferner werden die Schlitzwände der in der Frontplatte 28 des Einsatzteiles 22 ausgebildeten, schlüssellochartigen Öffnung 21 durch geeignetes Hinterschneiden von federnden Klinken 29 und 30 gebildet. Die Klinken 29, 30 sind derart geformt, daß sie einerseits eine Verengung des nicht näher bezeichneten Schlitzes und im Schlitzgrund eine dem Schaftdurchmesser des Kopfzapfens 13 entsprechende Fassung bilden. Mit 31 und 32 sind Öffnungen bezeichnet, die dem Durchführen von, wie FIGUR 4 zeigt, Schrauben 33 und 34 dienen, mittels denen das Gehäuse 1 beispielsweise an einer Wand 35 befestigt werden kann. Die nicht dargestellten Kabel der Geber- und Datenleitungen sowie der Energieversorgung werden vorzugsweise der Rückwand des Trägers zugeführt, sie sind aber bei Auf-Wand-Montage des Trägers auch an einer Seitenwand, insbesondere der Unterseite mit dem Träger kuppelbar.

Aus der FIGUR 4, die ein am Träger angeflanschtes, aber noch nicht in die Endposition eingerenktes Handgerät 2 zeigt, ist ersichtlich, daß der Kopfzapfen 13 in eine Senkung 36 in der Frontwand der Gehäuseschale 7 eingesetzt und mittels einer Mutter 37 befestigt ist. Ferner zeigt FIGUR 4, daß an dem Führungsteil 14, das mit einem an ihm angeformten plattenförmigen Riegel 38 durch eine spaltförmige Öffnung 39 in der Konsole 9 nach außen greift, und mit einem der Stabilisierung dienenden Steg 40 die Frontwand 41 der Gehäuseschale 7 umgreift, eine einem Schalter 42 zugeordnete Rampe 43 angeformt ist. Eine dem Führungsteil l4 zugeordnete Feder 44 hält das Führungsteil 14, wenn kein Handgerät gesetzt ist, in der in den FIGUREN 2 und 4 gezeigten Stellung.

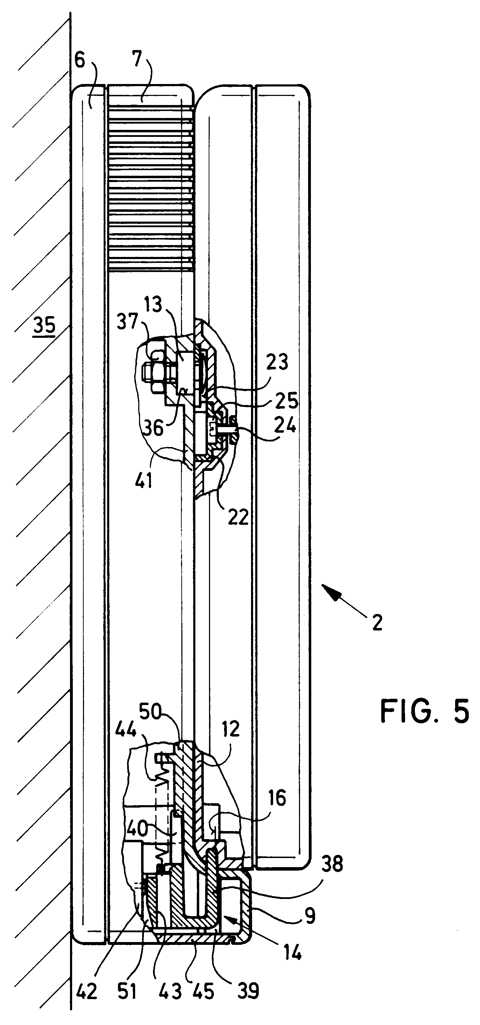

Aus der FIGUR 5, die das Handgerät 2 im eingerenkten und somit am Träger befestigten Zustand zeigt, ist ersichtlich, daß einerseits die Gehäuseschale 7 derart freigespart, andererseits die Gehäuseschale 6 mit einem solchen Wandteil 45 versehen ist, daß das Führungsteil 14 vor dem Zusammenfügen der beiden Gehäuseteile 6 und 7 leicht montiert werden kann.

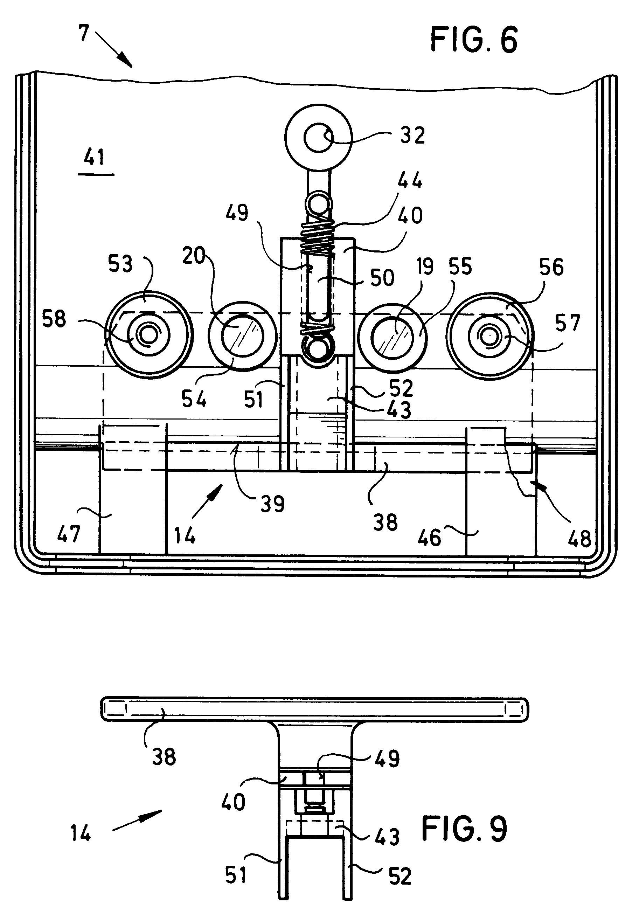

Die Rückansicht der Frontwand 41 (FIGUR 6) macht deutlich, daß der Riegel 38 des Führungsteils 14 in innerhalb der Konsole 9 durch Ausformen von Zwischenwänden 46 und 47 gebildeten Führungsschlitzen 48 geführt ist. Führungsfunktion hat auch der Steg 40, der mit einem Schlitz 49 mit einer an der Frontwand 41 ausgebildeten Rippe 50 in Verbindung steht. Die am Steg 40 ausgebildete Rampe 43 ist, um eine zuverlässige Zuordnung des Führungsteils 14 zum Schalter 42 zu erzielen, mit Wangen 51 und 52 versehen. Mit der FIGUR 9 ist eine Draufsicht des Führungsteils 14 dargestellt, die die Ausbildung des Führungsteils 14 zusätzlich verdeutlichen soll.

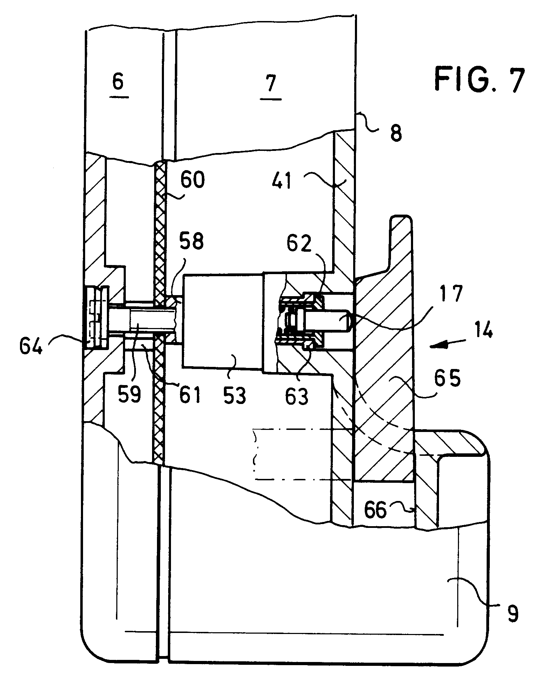

An der Frontwand 41 sind ferner nach innen weisende, rohrförmige Ansätze 53, 54, 55 und 56 angeformt, von denen 54 und 55 die Lichtkanäle bilden und 53 und 56 für die Aufnahme von Gewindebolzen 57 und 58 vorgesehen sind. Gemäß dem Teilschnitt FIGUR 7 dienen die Gewindebolzen 57 und 58 einerseits der mechanischen Verbindung der Gehäuseschalen 6 und 7 mittels Schrauben 59, wobei eine dem Gehäuse 1 zugeordnete Leiterplatte 60 zwischen den Gewindeansätzen und an der Gehäuseschale 6 angeformten Abstandshaltern 61 verspannt wird, andererseits wird über die Gewindebolzen 57 und 58, wenn sie mit der Leiterplatte 60 in Verbindung stehen, die elektrische Verbindung für die den Gewindebolzen 57 und 58 zugeordneten, stiftförmigen Kontakte 17 und 18 erzielt. Die Kontakte 17 und 18 sind jeweils in einer in die Gewindebolzen 57 und 58 einpreßbare Hülse 62, die außerdem der Aufnahme einer Druckfeder 63 dient, geführt. Mit 64 sind den Schrauben 59 zugeordnete Plomben bezeichnet.

Die Ausführungsvariante FIGUR 7 zeigt, daß das Führungsteil 14 auch in unmittelbarer Anlage mit der Flanschfläche 8 ausgebildet und geführt sein kann, und somit bezüglich der Leitungstrennstellen eine Abstreifer- bzw. Reinigungsfunktion ausübt, wobei eine entsprechend ausgebildete, evtl. faserbeschichtete Platte 65 eine in geeigneter Weise verbreiterte Öffnung in der Konsole 9 sowie entsprechende Führungsschlitze 66 bedingt.

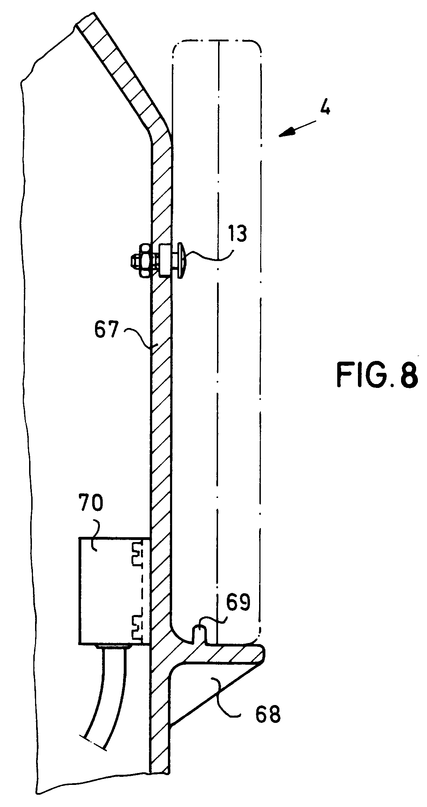

Das Ausführungsbeispiel FIGUR 8 zeigt die Halteelemente unmittelbar einem Verkleidungsteil 67 eines Kraftfahrzeuges zugeordnet. Dabei kann eine Konsole 68, an der als Führungsteil eine feststehende Rippe 69 angeformt ist, an dem Verkleidungsteil 67 befestigt oder unmittelbar angeformt sein. Der Kopfzapfen 13 ist in diesem Falle in der bereits beschriebenen Weise in das Verkleidungsteil 67 eingelassen. Ferner ist an dem Verkleidungsteil 67 ein Leitungsträger 70 befestigt, in dem die federnden Kontakte 17 und 18 sowie die lichtelektrischen Wandler für die Datenleitungen und deren optische Übertragungsmittel angeordnet sind. In diesem Falle, in dem der Träger lediglich die Befestigung bzw. Halteelemente trägt und als Leitungsverteiler dient, sind die Baugruppen für die Schnittstellenanpassung und die Spannungsversorgung in einer anderen, beispielsweise für Wartungszwecke besser zugänglichen Stelle im Fahrzeug angeordnet oder in einem dem System zugeordneten Rechner installiert.

## Patentansprüche

1. Halterung (1) für Datenkommunikationsgeräte, welche als an die Halterung angepaßte Handgeräte (2, 3, 4, 5) ausgebildet und für den Datentransport zwischen einer Datenverarbeitungsanlage und einer oder mehreren Datenquellen vorgesehen sind, mit den Datenkommunikationsgeräten zugeordneten Leitungstrennstellen,
dadurch gekennzeichnet,
daß an einem Träger eine im wesentlichen ebene Flanschfläche (8) ausgebildet ist,
daß der Flanschfläche (8) eine aus dem Träger herausragende Konsole (9) zugeordnet ist,
daß an dem Träger im Bereich der flanschfläche (8) Renkverbindungsmittel für die zu halternden Handgeräte (2, 3, 4, 5) vorgesehen sind und
daß der Konsole (9) ein sich parallel zur Flanschfläche (8) erstreckendes und mit den zu halternden Handgeräten (2, 3, 4, 5) in Wirkverbindung tretendes Führungsteil (14) zugeordnet ist.

2. Halterung und daran angepaßte Handgeräte nach Anspruch 1,
dadurch gekennzeichnet,
daß als Träger ein Verkleidungsteil (67) eines Kraftfahrzeuges, beispielsweise ein Armaturenbrett, dient.

3. Halterung und daran angepaßte Handgeräte nach Anspruch 1,
dadurch gekennzeichnet,
daß der Träger als ein im wesentlichen quaderförmiges Gehäuse (1) ausgebildet ist, in welchem wenigstens Mittel zur Schnittstellenanpassung und zur Spannungsversorgung angeordnet sind.

4. Halterung und daran angepaßte Handgeräte nach Anspruch 1,
dadurch gekennzeichnet,
daß die Trennstellen der Träger und Handgeräte (2, 3,4, 5) verbindenden Leitungen trägerseitig der Flanschfläche (8) zugeordnet sind.

5. Halterung und daran angepaßte Handgeräte nach Anspruch 1,
dadurch gekennzeichnet,
daß die Trennstellen der Leitungen derart angeordnet sind, daß sie durch das Führungsteil (14) abgeschirmt sind.

6. Halterung und daran angepaßte Handgeräte nach Anspruch 1,
dadurch gekennzeichnet,
daß das Führungsteil (14) im Träger verschiebbar und federnd gelagert und die aus der Konsole (9) herausragende Partie des Führungsteils (14) als ein plattenförmiger Riegel (38) ausgebildet ist.

7. Halterung und daran angepaßte Handgeräte nach Anspruch 6,
dadurch gekennzeichnet,
daß dem beweglichen Führungsteil (14) ein die Energieübertragung zwischen dem Träger und einem Handgerät (2) freigebender Schalter (42) zugeordnet ist.

8. Halterung und daran angepaßte Handgeräte nach Anspruch 1,
dadurch gekennzeichnet,
daß als Renkverbindungsmittel trägerseitig wenigstens ein mit einem Kopf versehener Zapfen (13) vorgesehen ist.

9. Halterung und daran angepaßte Handgeräte nach Anspruch 8,
dadurch gekennzeichnet,
daß der Kopf des trägerseitig angeordneten Kopfzapfens (13) als Kalotte ausgebildet ist.

10. Halterung und daran angepaßte Handgeräte nach Anspruch 1,
dadurch gekennzeichnet,
daß in der Rückwand (12) jedes Handgerätes (2, 3, 4, 5) eine dem Kopfzapfen (13) zugeordnete, schlüssellochartige Öffnung (21) und in der der Konsole (9) zugeordneten Stirnwand (15) eine dem Führungsteil (14) zugeordnete Aussparung (16) ausgebildet sind.

11. Halterung und daran angepaßte Handgeräte nach Anspruch 10,
dadurch gekennzeichnet,
daß in der Rückwand (12) jedes Handgerätes (2, 3, 4, 5) eine Vertiefung (23) ausgeformt ist und daß in die Vertiefung (23) ein die Schlüssellochartige Öffnung (21) tragendes Einsatzteil (22) eingesetzt ist.

12. Halterung und daran angepaßte Handgeräte nach Anspruch 11,
dadurch gekennzeichnet,
daß an dem Einsatzteil (22) den Schlitz des Schlüsselloches (21) begrenzende, federnde Finger (29, 30) ausgebildet sind.

## Claims

1. Mounting (1) for data communication device which are constructed as hand-held devices (2, 3, 4, 5) adapted to the mounting and are provided for the transport of data between a data processing system and one or more data sources, having line-separating points associated with the data communication devices, characterized in that a substantially planar flanging surface (8) is constructed on a support, in that a ledge (9) projecting out of the support is associated with the flanging surface (8), in that bayonet-connection means for the hand-held devices to be mounted (2, 3, 4, 5) are provided on the support in the region of the flanging surface (8), and in that there is associated with the ledge (8) a guide part (14) which extends parallel to the flanging surface (8) and comes into cooperative connection with the hand-held devices (2, 3, 4, 5) to be mounted.

2. Mounting and hand-held devices adapted thereto according to Claim 1, characterized in that a covering part (67) of a motor vehicle, for example a dashboard, serves as a support.

3. Mounting and hand-held devices adapted thereto according to Claim 1, characterized in that the support is constructed as a substantially cuboidal housing (1) in which there are arranged at least means for interface adaptation and for power supply.

4. Mounting and hand-held devices adapted thereto according to Claim 1, characterized in that the separating points of the lines connecting support and hand-held devices (2, 3, 4, 5) are associated with the flanging surface (8) on the support.

5. Mounting and hand-held devices adapted thereto according to Claim 1, characterized in that the separating points of the lines are arranged such that they are screened by the guide part (14).

6. Mounting and hand-held devices adapted thereto according to Claim 1, characterized in that the guide part (14) is mounted displaceably and resiliently and the portion of the guide part (14) projecting out of the ledge (9) is constructed as a plate-shaped bar (38).

7. Mounting and hand-held devices adapted thereto according to Claim 6, characterized in that there is associated with the movable guide part (14) a switch (42) which releases the power transfer between the support and a hand-held device (2).

8. Mounting and hand-held devices adapted thereto according to Claim 1, characterized in that at least one peg (13) provided with a head is provided on the support as a bayonet-connection means.

9. Mounting and hand-held devices adapted thereto according to Claim 8, characterized in that the head of the headed peg (13) arranged on the support is constructed as a spheroidal part.

10. Mounting and hand-held devices adapted thereto according to Claim 1, characterized in that a keyhole-type opening (21) associated with the headed peg (13) is constructed in the rear wall (12) of each hand-held device (2, 3, 4, 5) and a recess (16) associated with the guide part (14) is constructed in the end wall (15) associated with the ledge (9).

11. Mounting and hand-held devices adapted thereto according to Claim 10, characterized in that a depression (23) is formed in the rear wall (12) of each hand-held device (2, 3, 4, 5), and in that an insert part (22) bearing the keyhole-type opening (21) is inserted in the depression (23).

12. Mounting and hand-held devices adapted thereto according to Claim 11, characterized in that resilient fingers (29, 30) delimiting the slot of the keyhole (21) are constructed on the insert part (22).

## Revendications

1. Dispositif de fixation (1) pour des appareils de transmission de données qui sont réalisés sous forme de boîtiers portatifs (2, 3, 4, 5) adaptés audit dispositif de fixation et prévus pour le transport de données entre une installation de traitement de données et une ou plusieurs sources de données, avec des interfaces de lignes associées aux appareils de transmission de données,
caractérisé par le fait
que sur un support est formée une face de bride (8), pour l'essentiel, plane,
qu'à ladite face de bride (8) est associée une console (9) émergeant dudit support,
qu'audit support, dans la zone de ladite surface de bride (8), sont prévus des moyens d'assemblage à baïonnette pour les boîtiers portatifs (2, 3, 4, 5) à fixer et
qu'à ladite console (9) est associé un élément de guidage (14) s'étendant parallèlement à ladite face de bride (8) et entrant en coopération fonctionnelle avec lesdits boîtiers portatifs (2, 3, 4, 5) à fixer.

2. Dispositif de fixation et boîtiers portatifs adaptés à ce dernier selon la revendication 1,
caractérisé par le fait
que le support utilisé est un élément d'habillage (67) d'un véhicule automobile, par exemple un tableau de bord.

3. Dispositif de fixation et boîtiers portatifs adaptés à ce dernier selon la revendication 1,
caractérisé par le fait
que le support est réalisé sous la forme d'un coffret (1), pour l'essentiel, parallélépipédique dans lequel sont disposés au moins des moyens pour l'adaptation d'interfaces et pour l'alimentation en tension.

4. Dispositif de fixation et boîtiers portatifs adaptés à ce dernier selon la revendication 1,
caractérisé par le fait
que les interfaces des lignes électriques reliant les supports et boîtiers portatifs (2, 3, 4, 5) sont associées du côté du support à la surface bridée (8).

5. Dispositif de fixation et boîtiers portatifs adaptés à ce dernier selon la revendication 1,
caractérisé par le fait
que les interfaces des lignes électriques sont disposées de telle sorte qu'elles sont protégées par l'élément de guidage (14) faisant écran.

6. Dispositif de fixation et boîtiers portatifs adaptés à ce dernier selon la revendication 1,
caractérisé par le fait
que l'élément de guidage (14) est monté mobile et de manière élastique dans le support et que la partie dudit élément de guidage (14) qui émerge de la console (9) est réalisée comme verrou (38) en forme de plaque.

7. Dispositif de fixation et boîtiers portatifs adaptés à ce dernier selon la revendication 6,
caractérisé par le fait
qu'à l'élément de guidage mobile (14) est associé un interrupteur (42) débloquant la transmission d'énergie entre le support et un boîtier portatif (2).

8. Dispositif de fixation et boîtiers portatifs adaptés à ce dernier selon la revendication 1,
caractérisé par le fait
qu'il est prévu, du côté du support, comme assemblage à baïonnette, au moins un tenon (13) pourvu d'une tête.

9. Dispositif de fixation et boîtiers portatifs adaptés à ce dernier selon la revendication 8,
caractérisé par le fait
que la tête dudit tenon à tête (13) disposé du côté du support est réalisée sous forme de calotte.

10. Dispositif de fixation et boîtiers portatifs adaptés à ce dernier selon la revendication 1,
caractérisé par le fait
que l'on a réalisé, d'une part, dans la paroi arrière (12) de chaque boîtier portatif (2, 3, 4, 5), une ouverture (21) en forme de trou de serrure associée au tenon à tête (13) et, d'autre part, dans la paroi frontale (15) associée à la console (9), un évidement (16) associé à l'élément de guidage (14).

11. Dispositif de fixation et boîtiers portatifs adaptés à ce dernier selon la revendication 10,
caractérisé par le fait
que dans la paroi arrière (12) de chaque boîtier portatif (2, 3, 4, 5) est formée une cavité (23) et que dans ladite cavité (23) est inséré un élément d'insertion (22) portant l'ouverture (21) en forme de trou de serrure.

12. Dispositif de fixation et boîtiers portatifs adaptés à ce dernier selon la revendication 11,
caractérisé par le fait
que sur l'élément d'insertion (22) sont formés des doigts élastiques (29, 30) limitant la fente du trou de serrure (21).
